# EUROPÄISCHE PATENTANMELDUNG

(11) **EP 0 652 146 A1**
(43) Veröffentlichungstag der Anmeldung: **10.05.1995**
(21) Anmeldenummer: 94250250.1
(22) Anmeldetag: 14.10.1994
(51) Int. Cl.: B60T 13/66

(54) **Ventileinrichtung für Fahrzeugbremsen, insbesondere von Schienenfahrzeugen**

(30) Priorität: 10.11.1993 DE 4339013
(71) Anmelder: MANNESMANN Aktiengesellschaft, D-40213 Düsseldorf (DE)
(72) Erfinder: Keschwari, Mahmud Rasti, D-30890 Barsinghausen (DE)
(74) Vertreter: Meissner, Peter E., Dipl.-Ing.

(57) **Zusammenfassung**

Die Erfindung betrifft eine druckmittelbetriebene Bremseinrichtung für Schienenfahrzeugverbände mit einer Hauptluftleitung, über welche sowohl die einzelfahrzeugbezogenen Druckmittelreservoire befüllt werden, als auch die pneumatische Bremssignalübertragung erfolgt, wobei an jedem Einzelfahrzeug eine Steuerventileinrichtung angeordnet ist, welche bei Druckabfall in der Hauptluftleitung eine dem Maß des Druckabfalls proportionale Durchsteuerung des Druckmittels aus dem Reservoir zum Bremszylinder bewirkt.

Erfindungsgemäß weist die Steuerventileinrichtung (1) jeweils Proportionalventil-Funktion und darüber hinaus elektronische und/oder elektro-mechanische Mittel (10, 11, ... 21) auf, über welche der Druckabfall in der Hauptluftleitung (HL) meßbar, und ein elektrisches Ansteuersignal (Sb) zur Durchsteuerung des Druckmittels zum Bremszylinder (3) erzeugbar ist.

## Beschreibung

Die Erfindung betrifft eine Bremseinrichtung für Fahrzeuge, insbesondere für Schienenfahrzeuge, bzw. Schienenfahrzeugverbände, bei welchen durch eine zentrale Leitstelle das Bremssignal ausgelöst wird, gemaß Oberbegriff der Patentansprüche 1 bis 4.

Gemäß Oberbegriff handelt es sich hier um Bremsvorrichtungen nach der bekannten UIC 540-Norm. Hierbei geht man zentral von einem Führerbremsventil aus, welches an einer Druckquelle im Zugfahrzeug, d. h. in der Lokomotive, angeschlossen ist. Das Führerbremsventil ist mit der sogenannten Hauptluftleitung HL verbunden, welche durch alle Fahrzeuge des Fahrzeugverbundes durchgeschleift ist. Nach der herkömmlichen Norm UIC 540 enthält die Bremseinrichtung als druckführende Leitung nur die HL-Leitung. Wird nun am Zugfahrzeug bzw. an der Leitstelle das Signal "Bremsen" ausgelöst, so öffnet das Führerbremsventil die HL-Leitung, was einen Druckabfall in derselben bewirkt. Dieser Druckabfall setzt sich von Fahrzeug zu Fahrzeug fort, und wird in bekannter Weise von einem jeden fahrzeugbezogenen Steuerventil, welches in jedem Wagen des Zugverbandes angeordnet ist, erkannt, wobei dann der Druckverlust in HL ein vorher befülltes Druckmittelreservoir auf den entsprechenden Bremszylinder durchsteuert. Nach dieser UIC 540-Norm besitzt die HL-Leitung Doppelfunktion. Diese bestehen zum ersten aus der pneumatischen Übertragung des Bremssignales, welches durch den beschriebenen erzeugbaren Druckabfall repräsentiert wird, und zum zweiten werden über die HL-Leitung im nichtbetätigten Zustand der Bremseinrichtung die Druckmittelreservoire befüllt. Bekanntermaßen werden daher im Zugverband durch die Lokomotive bzw. das Zugfahrzeug zyklisch ausgelöste Füllstöße erzeugt, die auf die HL-Leitung gegeben werden, um die Druckmittelreservoire auf ihrem Nenndruck zu halten. Wird die Bremse betätigt, so wird bei diesem "Ein-Leitungssystem (pneumatisch)" die Bremszylinderbetätigung im Bremsmoment alleine aus dem Druckmittelreservoir gespeist. Diese bekannten Steuerventile sind bekanntermaßen rein pneumatische bzw. mechanische Elemente. Bekanntermaßen findet In den benannten Steuerventilen auch noch eine sogenannte Bremsbeschleunigung statt. Diese ist bekannt und durch die Tatsache motiviert, daß sich das Bremssignal mit einer Ausbreitungsgeschwindigkeit kleiner als die Schallgeschwindigkeit durch die HL-Leitung ausbreitet. Bei langen Zugverbänden kommt somit das Bremssignal an den letzten Fahrzeugen sehr viel später an. Um die Fortpflanzungsgeschwindigkeit des pneumatischen Signales zu erhöhen, wird am ersten Steuerventil, d. h. am ersten Fahrzeug, die HL-Leitung zusätzlich weiter entlüftet, und dies setzt sich sukzessive von einem zum anderen Steuerventil, d. h. von einem zum anderen Fahrzeug fort, so daß sich die Übertragungsgeschwindigkeit des pneumatischen Signales erhöht.

Nach der UIC Norm kommt einem bestimmten Muster von Druckabfallgradienten, d. h. Druckabfall pro Zeiteinheit, auch eine entsprechende mehr oder weniger Durchsteuerung bzw. Betätigung des Bremszylinders zu. Das heißt je steiler der Gradient, um so stärker die Bremsbetätigung. Ein solches Verhalten kann bei langen Zügen und bei Bremseinrichtungen nach der beschriebenen Norm UIC 540 bei jedem einzelnen Fahrzeug eines solchen Zugverbandes nur schwer konsequent realisiert werden. Für die Anstrebungen für beispielsweise den Hochgeschwindigkeits-Güterverkehr, ist eine genaue Bremsung an jedem einzelnen Fahrzeug des Fahrzeugverbundes, d. h. des Zuges, notwendig. Dies aus dem Grund, da hier die Sicherheitsauflagen bezüglich Bremsweg sehr hoch sind, und eine nahezu 100 %-ig optimierte Bremsung notwendig wird.

Der Erfindung liegt daher die Aufgabe zugrunde, eine druckmittelbetriebene Bremseinrichtung für Schienenfahrzeugverbände der gattungsgemäßen Art derart weiterzubilden, daß jedes Fahrzeug des Fahrzeugverbundes bzw. des Zuges zur Erreichung eines möglichst kurzen Bremsweges optimal gebremst werden kann.

Bei einer Bremseinrichtung der gattungsgemäßen Art wird die Aufgabe erfindungsgemäß durch die Merkmale der Patentansprüche 1 und 4 gelöst. Weitere vorteilhafte Ausgestaltungen der Erfindung sind in den übrigen Unteransprüchen gegeben.

Das Wesen der Erfindung greift an der Stelle des Steuerventiles an. Erfindungsgemäß wird dieses Steuerventil fortan nicht mehr rein mechanisch bzw. pneumatisch ausgestaltet, sondern mit elektronischen Elementen, sowie Meßwertumformern, im wesentlichen Druckmeßumformern versehen. Dies führt dazu, daß die Maßgabe, daß das Steuerventil auf einen Druckabfall zu reagieren hat, und diesen auch noch gradientenmäßig auszuwerten hat, um zu entscheiden, ob eine vorsichtige oder möglicherweise eine Notbremse vorgenommen werden muß, nun elektrisch bzw. elektronisch gegeben sein muß. Hierzu war das grundlegende Problem, welches durch die Erfindung gelöst werden mußte, daß ein übliches Druckmittelleitungssystem nach der Norm UIC 540 verwendet wird, was bedeutet, daß wiederum aus einer einzigen Leitung sowohl das pneumatische Bremssignal, als auch die Befüllung des Druckmittelreservoirs zur Bremsbetätigung erfolgen muß. Aus der Ermittlung der aktuellen Druckwerte bzw. aus der Errechenbarkeit der Gradienten durch die zusätzlichen elektronischen Hilfsmittel im Bereich der Steuerventileinrichtung, ist es möglich, die Bremssignalgradienten und damit die Bremsbetätigung erheblich feinfühliger vorzunehmen bzw. zu dosieren. Fernerhin ist es unter Zuhilfenahme elektronischer Mittel nunmehr möglich, daß ganze System mit zusätzlicher Anordnung von Speicherelementen adaptiv anzulegen. Das heißt die Erfindung ermöglicht es, daß in jedem Wagen die baugleiche Steuerventileinrichtung eingebaut werden kann, jedoch nach Bremsprobe jede Steuerventileinrichtung das für das spezifische Fahrzeug, in weichem die entsprechende Steuerventileinrichtung angeordnet ist, und die dortige Bremse betätigt, das spezifische Bremsverhalten berücksichtigt, und dasselbe auch noch abspeichert. Dies ist der Vorteil, der durch die Adaptivität des Systems vorgegeben wird. Fernerhin können über die elektronischen Mittel sämtliche Betriebszustände an die Leitstelle beispielsweise über Busverbindungen übertragen und angezeigt bzw. ausgewertet werden. Somit ist auch die Rückmeldefunktion von jedem einzelnen Fahrzeug zum Zugfahrzeug möglich. Hierdurch bleibt nach wie vor die UIC-Norm 540, d. h. die entsprechenden Kennlinien der Gradienten zur Auslösung der Bremsen, erhalten.

Im übrigen ergibt sich, daß bei einem herkömmlichen Steuerventil die Aussteuerung des Bremsdrucks nur ein reglungstechnisch bedingt geschlossenes System ist. Die Geschlossenheit ergibt sich hier aus einer Druckangleichung, so daß die Druckverhältnisse sich mehr oder weniger selbsttätig einstellen. Mit Hilfe der erfindungsgemäßen Lösung ist es jedoch möglich, daß durch die vor Ort angeordnete steuerventilspezifische Elektronikeinheit ein Soll-Istwert-Vergleich vorgenommen werden kann, wodurch letztendlich die Ventilansteuerung zur Durchsteuerung des Bremsdruckes feiner geregelt werden kann. Dies hat direkte Auswirkungen darauf, daß die Bremskennlinien reproduzierbarer und genauer erreicht werden können.

Die Erfindung ist in der Zeichnung konstruktiv näher erläutert.

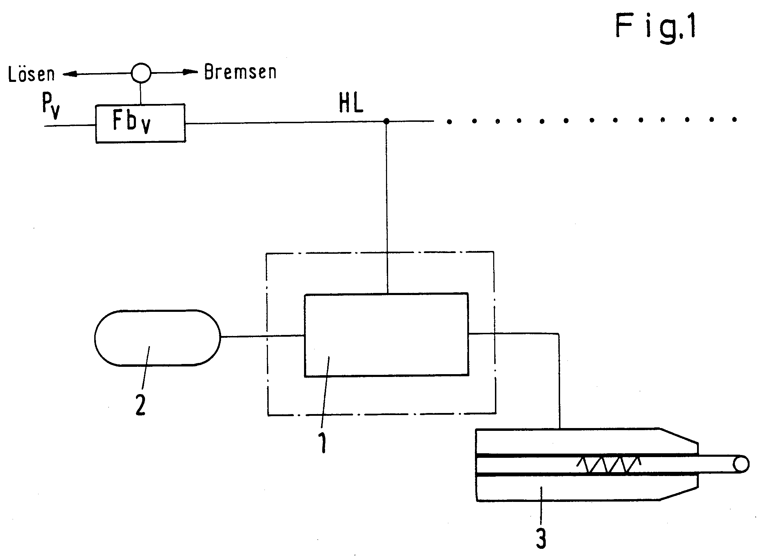

Es zeigt Figur 1 Übersicht über eine Bremseinrichtung nach der Norm UIC 540.

Figur 2 erfindungsgemäße Ausgestaltung der substituierten Steuerventileinrichtung.

Figur 3 zweite Variante; ersetzendes Proportionalventil durch EP-Umsetzer mit nachgeschaltetem EP-Umsetzer.

Figur 4 Diagramm über die Druckgradienten nach der UIC Norm 540.

Figur 1 zeigt eine Übersicht über ein Bremssystem nach der Norm UIC 540. Von einem Führerbremsventil Fbv welches an einer Druckversorgung PV anliegt und innerhalb des Zugfahrzeuges, d. h. der Lokomotive angeordnet ist, geht eine pneumatische Druckleitung HL aus, welche von eins Wagen des Schienenfahrzeugverbandes zum anderen geführt wird. An jedem angehängten Wagen befindet sich eine Bremseinrichtung, im wesentlichen bestehend aus einem Steuerventil 1, einem Druckmittelreservoir 2, sowie einem Bremszylinder 3. Wird nun in der Lokomotive über das Führerbremsventil Fbv die Hauptluftleitung HL entlüftet, so geschieht dies nach der Vorgabe des Lokomotivführers mehr oder weniger stark. Dies bewirkt in der Hauptluftleitung entsprechend einen kleinen oder großen Gradienten bezüglich des Druckabfalls. Dieser Gradient wird vom Steuerventil 1 detektiert, und proportional zu diesem detektierten Gradienten das im Druckmittelreservoir 2 gespeicherte Druckmittel auf den Bremszylinder 3 durchgesteuert. Das Wesen der UIC 540-Norm ist, daß die Hauptluftleitung HL sowohl das pneumatische Signal zum Auslösen der Bremsung führt, als auch gleichzeitig Versorgungsleitung für das Befüllen des Druckmittelreservoirs 2 ist.

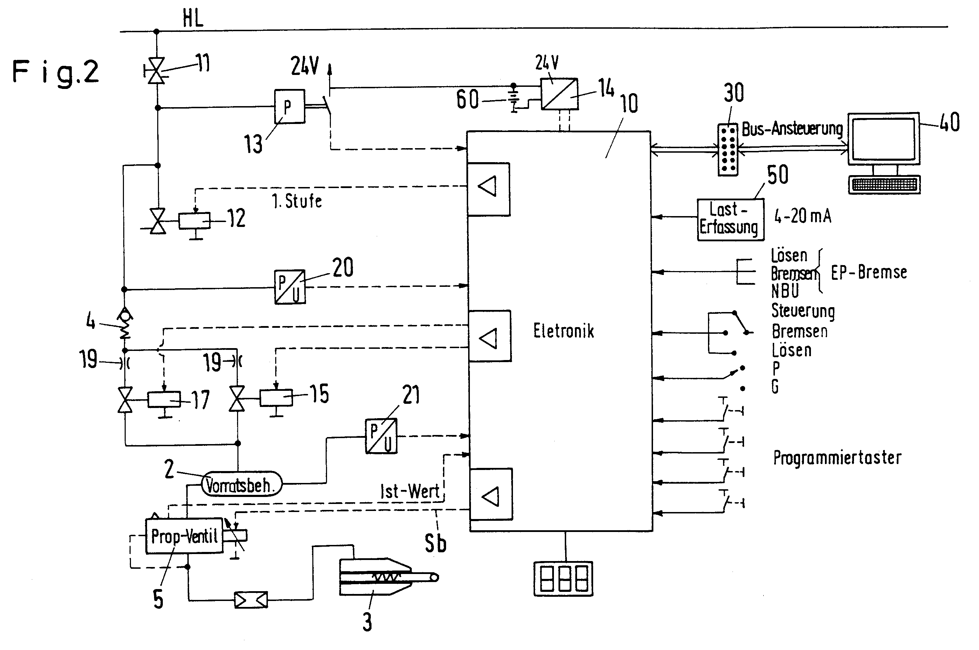

Figur 2 zeigt die erfindungsgemäße Substitution des Steuerventiles durch eine Steuerventileinrichtung. In jedem Fahrzeug befindet sich an der HL-Leitung ein erstes Ventil 11 mit dem die Bremseinrichtung aktiv geschaltet werden kann. Wird dieses Ventil geöffnet, so löst der Druck in der HL-Leitung ein Relais 13 aus, welches die Elektronik an die elektrische Versorgung 14 schaltet. Für den Fall, daß durch mögliche Umstände der Druck in der HL-Leitung vollkommen absinkt, ist verhindert, daß das betätigte Relais 13 wieder öffnet und die Elektronik 10 spannungsfrei schaltet. Hierzu ist im Bereich des Relais 13 eine Pufferbatterie 60 angeordnet, weiche die Elektronik 10 auch im ereignisbedingten drucklosen Zustand der HL-Leitung elektrisch unter Versorgung hält. Nach dem Ein/Aus-Ventil 11 folgt im Druckmittelweg ein Entlüftungsventil 12, welches elektrisch angesteuert wird, wobei das elektrische Ansteuersignal aus einem Verstärker der Elektronik 10 generiert wird. Dieses Ventil 12 übernimmt die bekannte Funktion der Bremsbeschleunigung und bewirkt bei Öffnen der HL-Leitung ein weiteres Absenken des Druckes in derselben.

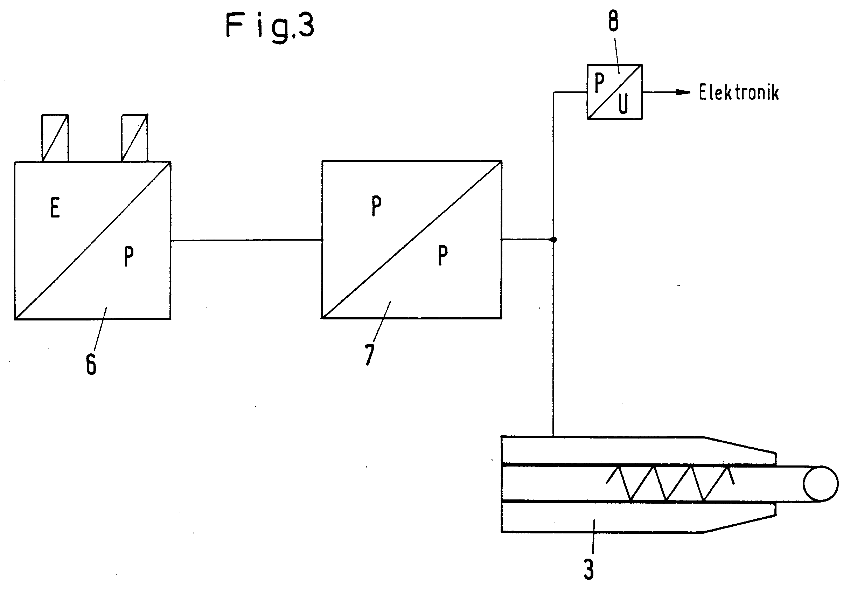

Nachfolgend wird der Druck in einem ersten Meßumformer 20 in ein elektrisches Signal umgeformt und der Elektronik 10 zugeführt. Dieser Meßwert repräsentiert den aktuellen Druck in der gesamten HL-Leitung. Nachfolgend im Druckmittelweg sind zwei parallel angeordnete Ventile 15, 17 angeordnet, welche einzeln oder gemeinsam geschaltet den Befüllungsquerschnitt zum Vorratsbehälter 2 variierbar machen. Diese Ventile werden ebenfalls elektrisch aus der Elektronik 10 generiert angesteuert. Vorzugsweise können in die beiden parallelen Druckmittelwege Drosselquerschnitte eingebaut sein. Somit ist ein normales Befüllung, jedoch auch eine Schnellbefüllung über die benannten Füllstöße möglich. Zum Sichern des im Vorratsbehälter 2 gespeicherten Vorratsdruckes ist desweiteren ein Rückschlagventil 4 vorgesehen, welches im Falle der pneumatischen Trennung der Druckmittelwege von der HL-Leitung eine Entlüftung des Vorratsbehälters 2 verhindert. Der Druck im Vorratsbehälter wird in einem zweiten Meßumformer 21 gemessen und der Elektronik zugeführt. Im Wege der Informations- bzw. Signalrückkopplung wird in der Elektronik dann das Ansteuern der beiden Ventile 15 und 17 erzeugt, welche die Befüllung des Vorratsbehälters steuern. Gegenüber bekannten Lösungen ist es somit möglich den Druck im Vorratsbehälter 2 individuell und reproduzierbar einzustellen, und ihn im Gegensatz zu bekannten Lösungen, bei denen nur Schwellwertgesteuert vorgegangen wird, hier eine individuelle Einstellung vorzunehmen. Nachfolgend zum Vorratsbehälter 2 ist ein Proportionalventil 5 angeordnet, welches ebenfalls über die Elektronik 10 ansteuerbar ist. Dieses Proportionalventil 5 steuert im Bremsfall aus dem Vorratsbehälter 2 nun den entsprechend dem auf der HL-Leitung gegebenen Bremssignal proportionalen Bremsdruck, gemäß den durch die UIC-Norm vorgegebenen Gradienten durch. Das genannte Proportionalventil 5 kann auch funktional durch eine Anordnung gemäß Fig. 3 substituiert werden.

Dies geschieht erfindungsgemäß durch eine Anordnung eines EP-Umformers 6 sowie eines nachgeschalteten PP-Umformers bzw. Druckumsetzers 7. Eine solche Lösung hätte den Vorteil, daß bei einer Unterbrechung der elektrischen Ansteuerung der Druck in dem Druckmittelsystem bis hin zum Bremszylinder erhalten bleibt.

Fernerhin ist im erstbenannten Proportionalventil 5 ein Meßumformer 21 enthalten, welcher den Ausgangsdruck, welcher zum Bremszylinder durchgesteuert wird, mißt. Dieser gemessene Druckwert wird dabei als Istwert der Elektronik 10 zugeführt und mit dem durch die HL-Leitung ausgelösten und über den Meßumformer 20 in die Elektronik 10 eingespeisten Sollwert verglichen. Insgesamt ergibt sich gegenüber der herkömmlichen Steuerventilanordnung eine insgesamt "geschlossen" vorgenommene Regelung der Bremsdruckansteuerung für den Bremszylinder.

Ferner hat man durch die Plazierung einer Elektronik 10 auch die Zugriffsmöglichkeit bis hin zur Lokomotive. Hierbei kann im Zugriff auf die Elektronik 10 ein Bussystem 30 vorgesehen sein, welche mit einem zentralen Computer 40 samt Bildschirm in der Lokomotive verbunden ist. Ferner kann in die Elektronik als zusätzlicher Parameter die Erfassung der an die Lokomotive angehängten Last 50 eingeführt werden. Ferner ist es möglich, daß jedes einzeine Fahrzeug über eine Selbstermittlung des Ladegewichtes bzw. des Gesamtgewichtes dies als Meßwert in die Elektronik 10 einspeist. Dies würde zu einer weiteren Optimierung der jeweiligen fahrzeugbezogenen Bremse führen. Ferner können die Signale lösen und bremsen auch elektronisch der Lokomotive ausgelöst und in die jeweilige Elektronik 10 eingespeist werden. Fernerhin ermöglichen Programmiertaster an der Elektronik 10 eine mögliche Codierung eines jeden einzelnen Fahrzeuges. Um die ganze Bremseinrichtung, auf jedes Fahrzeug bezogen, adaptiv anzulegen, kann die Elektronik 10 jeweils mit Speicherbauelementen versehen sein.

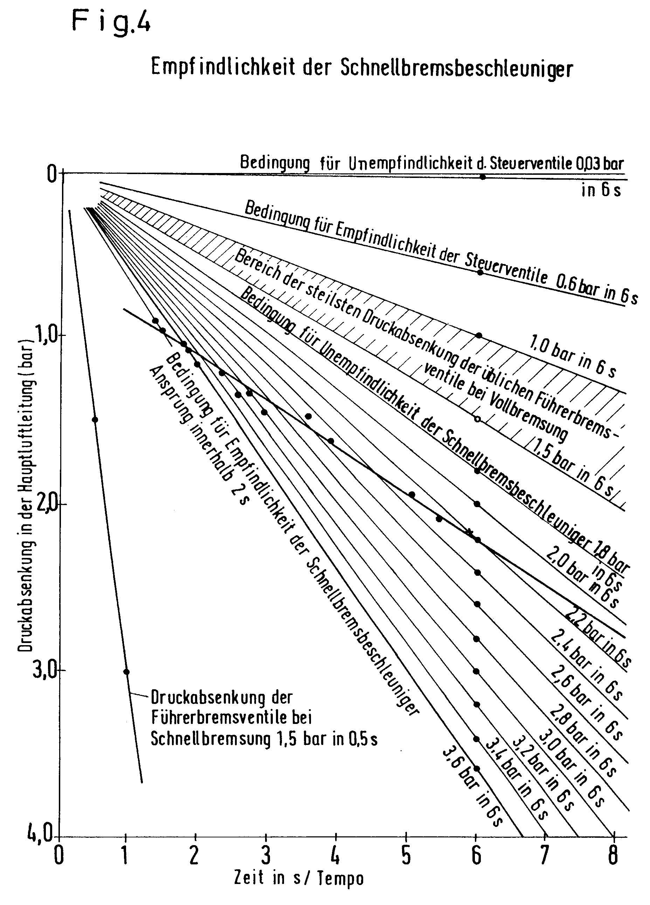

Figur 4 zeigt die Empfindlichkeit der Bremseinrichtung als Funktion der Druckabsenkung in der Hauptluftleitung HL als Funktion der Zeit. Hierbei sind die Druckabfall-Gradienten nach der UIC Norm zu erkennen. Für starke Bremsungen ist dieser Gradient entsprechend groß, das bedeutet großer Druckabfall pro Zeiteinheit; und für eine schwache Bremsung sind diese Druckgradienten entsprechend klein, d. h. kleiner Druckabfall pro Zeiteinheit.

## Patentansprüche

1. Druckmittelbetriebene Bremseinrichtung für Schienenfahrzeugverbände mit einer Hauptluftleitung, über welche sowohl die einzelfahrzeugbezogenen Druckmittelreservoire befüllt werden, als auch die pneumatische Bremssignalübertragung erfolgt, wobei an jedem Einzelfahrzeug eine Steuerventileinrichtung angeordnet ist, weiche bei Druckabfall in der Hauptluftleitung eine dem Maß des Druckabfalls proportionale Durchsteuerung des Druckmittels aus dem Reservoir zum Bremszylinder bewirkt,
dadurch gekennzeichnet,
daß die Steuerventileinrichtung (1) jeweils Proportionalventil-Funktion und darüber hinaus elektronische und/oder elektro-mechanische Mittel (10, 11,...21) aufweist, über welche der Druckabfall in der Hauptluftleitung (HL) meßbar, und ein elektrisches Ansteuersignal (Sb) zur Durchsteuerung des Druckmittels zum Bremszylinder (3) erzeugbar ist.

2. Bremseinrichtung für Schienenfahrzeugverbände nach Anspruch 1,
dadurch gekennzeichnet,
daß zwei Druck-Spannungs-Wandler (20, 21) vorgesehen sind, wobei dem ersten Druck-Spannungs-Wandler (20) die Messung des Drucks in der Hauptluftleitung (HL) zukommt, und den zweitem Druck-Spannungs-Wandler (21) die Messung des Drucks im Druckmittelreservoir (2) zugeordnet ist.

3. Druckmittelbetriebene Bremseinrichtung für Schienenfahrzeugverbände nach Anspruch 2,
dadurch gekennzeichnet,
daß das Ventil zum Durchsteuern des Druckmittels zum Bremszylinder (3) ein Proportionalventil (5) ist.

4. Druckmittelbetriebene Bremseinrichtung für Schienenfahrzeugverbände mit einer Hauptluftleitung über welche sowohl die Druckmittelversorgung, als auch die pneumatische Bremssignalübertragung erfolgt, wobei an jedem Einzelfahrzeug eine Steuerventileinrichtung angeordnet ist, welche bei Druckabfall in der Hauptluftleitung eine dem Maß des Druckabfalls proportionale Betätigung des Bremszylinders bewirkt,
dadurch gekennzeichnet,
daß die Steuerventileinrichtung jeweils einen EP-Umsetzer (6) mit nachgeschaltetem Druckumsetzer (7) beinhaltet, und darüber hinaus elektronische und/oder elektro-mechanische Mittel aufweist, über welche der Druckabfall in der Hauptluftleitung meßbar und ein elektrisches Ansteuersignal für den EP-Umsetzer (6) erzeugbar ist.

5. Druckmittelbetriebene Bremseinrichtung für Schienenfahrzeuge nach Anspruch 4,
dadurch gekennzeichnet,
daß am Ausgang des Druckumsetzers (7) ein weiterer Druck-Spannungs-Wandler (8) angeordnet ist.
